# EUROPEAN PATENT SPECIFICATION

(11) **EP 2 080 792 B1**
(45) Date of publication and mention of the grant of the patent: **14.02.2018**
(21) Application number: 08163368.7
(22) Date of filing: 01.09.2008
(51) Int. Cl.: C09D 5/24, C09D 7/12, C08K 3/04, C09D 4/06

(54) **Water soluble photo-curable antistatic composition with improved wear resistance and high transparency, and conductive hard tile flooring material coated with the same**
Wasserlösliche, lichthärtbare, antistatische Zusammensetzung mit verbesserter Verschleißbeständigkeit und hoher Transparenz und damit beschichtetes leitfähiges Hartfliesenbodenmaterial
Composition antistatique photo-durcissable soluble dans l'eau avec une résistance à l'usure améliorée et une transparence élevée, et un matériau de plancher à carreaux conducteur recouvert de celle-ci

(30) Priority: 17.01.2008 KR 20080005258
(43) Date of publication of application: 22.07.2009
(73) Proprietor: Kim, Chae-Ho, Gwacheon-si, Gyeonggi-do 427-060 (KR)
(72) Inventor: Kim, Chae-Ho, Gwacheon-si, Gyeonggi-do 427-060 (KR)
(74) Representative: Gervasi, Gemma

(56) References cited:
- EP-A1- 1 764 382
- WO-A1-2006/040398
- US-A- 5 516 546
- US-A1- 2007 166 523
- DATABASE WPI Week 200618 Thomson Scientific, London, GB; AN 2006-168238 XP002553327 & JP 2006 045384 A (MITSUBISHI RAYON CO LTD) 16 February 2006 (2006-02-16)

## Description

### BACKGROUND OF THE INVENTION

This application claims priority to Korean Patent Application No. 10-2008-5258, filed on January 17, 2008, in the Korean Intellectual Property Office.

### 1. Field of the Invention

The present invention relates to conductive hard tile flooring materials coated with water soluble and photo-curable antistatic resin having excellent wear resistance and transparency and, more particularly, to a water soluble and photo-curable antistatic composition with improved wear resistance and high transparency for hard coating, as well as a conductive tile flooring material having double-layer laminated structure coated with the antistatic composition, so that the flooring material can protect surface of a conductive tile flooring against external wearing impact, inhibit electrostatic discharge damage and transmit at least 80% of original color of the conductive tile flooring.

### 2. Description of the Related Art

Since higher integration of electronic parts and/or semiconductor devices caused a significant problem in relation to failure of such products, many studies and efforts have been performed in order to considerably reduce electrostatic discharge failures of electronic parts and/or semiconductor devices as possible.

Electrostatic discharge generated by workers in processes of manufacturing, assembling, packaging and/or delivering electronic parts, or in working environments with package materials and/or various instruments as well as fine particles such as dust deposited to electronic parts and products (abbrev. to "electronics") by the electrostatic discharge, become a greater part of causes for failure of the electronics.

Therefore, storage and delivery cases required for manufacturing or assembling electronics and entire circumstances around a working place including floor of the working place must have antistatic performance. In order to protect electronics and/or semiconductor devices manufacturing environment, a clean-room system is well known to remove fine particles including dust. However, conventional conductive tile flooring materials for clean-room which are usually prepared of rubber or PVC (polyvinyl chloride) resin, are susceptible to wearing caused by delivery of instruments or other things to generate fine wear particles, so that the clean-room had not played its important role in manufacturing of electronics and/or semiconductor devices.

Conductive tile flooring materials are well known in prior arts that include, for example: Korean Patent No. 10-427554, entitled "PVC carpet tile using carbon black and the method of manufacturing thereof", which disclosed a conductive PVC carpet tile with a laminated structure of PVC resin layer containing carbon black, glass fiber layer, non-woven fabric layer, fiber layer woven with carbon black containing yarns, etc.; and Korean Patent No. 10-589279, entitled "Conductive marble flooring and method of making the same by continuous process", which disclosed a decorative flooring with marble effect and stable conductivity obtained by uniformly comprising conductive carbon black and back-printing rear side of the flooring with conductive carbon black ink. Briefly, the conductive flooring materials reported in these documents represent antistatic property by application of carbon black or through a fiber layer woven of yarns containing carbon fiber. However, such flooring materials necessarily involve generation of fine wear particles due to limited wear resistance of conductive tiles made of plastic such as rubber or PVC, thereby being not eco-friendly and causing wrong operation and operational failure of electronic devices and parts.

Also, photo-curable coating compositions are well known in prior arts that include, for example: Korean Patent No. 10-246036, entitled "Anti-static and abrasion resistant UV curable acrylic coating composition", which disclosed a UV curable coating composition containing conductive microfine particulate sol; Korean Patent No. 10-373207, entitled "Light curable anti-static and abrasion resistant coating composition", which disclosed a coating composition comprising conductive fine particles as well as mono-functional and multi-functional acrylate monomers; and Korean patent application No. 2002-7013227, entitled "Composition for antistatic coat, antistatic hard coat, process for producing the same, and multilayered film with antistatic hard coat", which disclosed an antistatic hard coating composition prepared by adding conductive fine particles with diameter of 10 to 30nm to multi-functional acrylate together with silicon compound. The photo-curable resin compositions claimed in the above documents are for improvement of coating characteristics such as antistatic property and wear resistance, etc. But, due to excess charging of conductive fine particles, these composition cannot endow transparency to oligomer comprising, for example, acrylate as a primary ingredient.

Colored electroconductive primer compositions comprising carbon nanotubes are also known in the art, for example: Japanese patent application No. 2006-045384, entitled "Colored conductive primer composition,method for forming colored conductive primer and electrostatic coating method", which disclosed a conductive polymer, carbon nanotube particles, a solvent and a pigment and/or a dye, wherein the solvent is preferably water.

### SUMMARY OF THE INVENTION

Accordingly, the present invention is directed to solve problems of conventional methods as described above and, an object of the present invention is to provide a conductive tile flooring material having double-layer laminated structure which comprises conductive tile and a transparent coating layer capable of expressing at least 80% of original color of the conductive tile, so that it represents noticeable improvement of wear resistance to greatly inhibit generation of fine wear particles and high antistatic property substantially equal to or more than that of the conductive tile.

More particularly, the present invention provides a water soluble photo-curable antistatic resin composition, comprising: in relation to total weight of the composition, 5 to 15% by weight ("wt.%") of conductive fine particles containing carbon nanotubes; 0.1 to 5wt.% of fumed silica; 10 to 20wt.% of water soluble epoxy or urethane acrylate; 20 to 75wt.% of mono-functional monomer or multi-functional monomer 0.1 to 5wt.% of photo-polymerization initiator; 0.1 to 5wt.% of additive including at least one selected from a group consisting of adhesion enhancer, dispersing agent, defoaming agent, leveling agent and the like; and 50 to 150 parts by weight of pure water relative to total 100 weight of the above ingredients, wherein the conductive fine particles have content of carbon nanotubes in the range of 0.004 to 80wt.% and further include antimony-doped tin oxide (ATO), and wherein the conductive fine particles have particle diameter in the range of 5 to 200 nm. Although the conductive tile flooring material with double-layer laminated structure of the present invention includes the photo-curable resin composition prepared by using pure water as a solvent according to the present invention, the flooring material represents superior formation of a coating film and surface smoothness, excellent wear resistance resulting from activity of a surface coating layer comprising the photo-curable resin composition as a protective layer to prevent wearing of conductive tile, and conductivity equal to or more than that of the conductive tile, thereby effectively expressing improved antistatic property. In addition, the tile flooring material has double-layer laminated structure which is composed of a coating layer formed by the photo-curable coating composition of the present invention with at least 80% of transparency, as well as a conductive tile, so that it can freely expresses original color of the conductive tile and improve wear resistance of the conductive tile, then, actively inhibit generation of fine wear particles.

The antistatic coating layer described above has very small thickness of about 3 to 7 *µ*m and is water soluble so as to make the flooring material eco-friendly and harmless to human body during coating process.

In order to accomplish the above objects, an aspect of the present invention is to provide a water soluble photo-curable antistatic coating composition, characterized by specific constitutional composition corresponding to that of commonly known water soluble photo-curable resin composition, electric resistance of not more than 10Ω(ohm) measured by ASTM F 150 standards and wearing capacity of not more than 0.1g measured by ASTM D 3389 standards and which principally comprises 5 to 15 parts by weight of conductive fine particles as defined before and 0.1 to 5 parts by weight of fumed silica.

Another aspect of the present invention is to provide a conductive tile flooring material with double-layer laminated structure prepared by applying the water soluble photo-curable resin composition of the present invention to a conductive tile with thickness of 3 to 7 *µ*m.

A further aspect of the present invention is to provide a use of the composition of the present invention for coating a conductive tile flooring material having double-layer laminated structure.

### DETAILED DESCRIPTION OF THE INVENTION

These and other objects, features, aspects, and advantages of the present invention will be more fully described in the following detailed description.

The conductive tile flooring material with double-layer laminated structure prepared by application of the water soluble photo-curable antistatic composition according to the present invention endows semi-permanent antistatic property to typical conductive tile and has excellent wear resistance and transparency.

According to the present invention, the coating composition is water soluble and uses pure water as a solvent so as to be eco-friendly and harmless to human body. In addition, because of excellent wear resistance and antistatic property, the coating composition can continuously maintain or improve original characteristics such as physical properties and enhance durability and antistatic property of a conductive tile flooring material, and further considerably inhibit generation of dust particles from the same.

As clearly understood from the above description and the following preferred embodiments of the present invention, the conductive tile flooring material having double-layer laminated structure coated with the water soluble photo-curable resin composition of the present invention represents improved wear resistance and antistatic property, and expresses at least 80% of original color of conductive tile to form the tile flooring material.

Furthermore, the water soluble photo-curable coating composition comprising conductive fine particles and carbon nanotubes according to the present invention uses pure water as a solvent so as to be eco-friendly and harmless to human body during working, and can greatly reduce generation of fine dust particles caused by wearing.

The conductive tile flooring material with double-layer laminated structure will be more particularly described as follows.

### (1) water soluble photo-curable antistatic resin composition

The water soluble photo-curable antistatic resin composition of the present invention has specific constitutional composition of the following essential ingredients:
1. conductive fine particles containing carbon nanotubes, 5 to 15wt.%
2. fumed silica, 0.1 to 5wt.%
3. water soluble epoxy or urethane acrylate based oligomer, 10 to 20wt.%
4. mono-functional and/or multi-functional monomer, 20 to 75wt.%
5. photo-polymerization initiator, 0.1 to 5wt.%
6. at least one of additives selected from a group consisting of adhesive enhancer, defoaming agent, leveling agent, wetting and dispersing agent, stabilizer, fine particle dispersing agent and the like, total 0.1 to 5wt.%
7. pure water as solvent, 50 to 150 parts by weight relative to total 100 parts by weight of all of the above ingredients

The conductive fine particles may further include antimony-doped tin oxide (ATO), indium-doped tin oxide (ITO), antimony-doped zinc oxide (AZO), etc. other than carbon nanotubes. The conductive fine particles have particle diameter in the range of 5 to 200nm and, preferably, average particle diameter of not more than 50nm. Also, at least 60% of total amount of particles preferably have a distribution of particle diameters within 100nm.

If the particle diameter is not under the above conditions, the fine particles cause light scattering and loss of transparency.

Carbon nanotubes can comprise any one of single-walled, double-walled and/or multi-walled nanotubes.

The conductive fine particles need content of carbon nanotubes in the range of 0.004 to 80wt.%. If the content of carbon nanotubes is less than 0.004wt.%, the coating composition does not have sufficient antistatic effect. On the other hand, for more than 80wt.% of carbon nanotubes, the coating composition cannot ensure more than 80% of transparency for the flooring material when measured by means of a UV spectrometer.

Carbon nanotubes are not particularly limited but preferably include, for example: carbon nanotube treated in strong acidic and/or basic solution such as nitric acid, mixture of nitric acid and sulfuric acid, hydrogen peroxide, mixture of hydrogen peroxide and ammonium hydroxide, etc.; surface modified carbon nanotube by organic compound such as imidazole, amine, acryl, etc.; carbon nanotube heated at 400 °C or more for at least 2 hours; and carbon nanotube in original state thereof without alternative treatment, in order to exhibit desired features. Preferably, the carbon nanotubes are carbon nanotubes treated with strong acid or base. More preferably, surface modified carbon nanotubes provide maximum effect with minimum content of the carbon nanotubes.

Fumed silica as one of the essential ingredients has average coagulation size of not more than 0.2*µ*m. And, content of the fumed silica ranges from 0.1 to 5 parts by weight. If the content of the fumed silica is less than 0.1 parts by weight, the flooring material cannot have desired wear resistance. On the other hand, for more than 5 parts by weight of the fumed silica, the coating composition has increased viscosity causing reduction of coating characteristics to conductive tiles.

Other ingredients are also essential to prepare the water soluble photo-curable resin composition according to the present invention, which include, for example: 10 to 20wt.% of water soluble epoxy or urethane based acrylate oligomer; 20 to 75wt.% of monomer mixture including mono-functional and multi-functional monomers in relative ratio by weight of (0 to 50):(100 to 50); 0.1 to 5wt.% of photo-polymerization initiator such as hydroxycyclohexylphenylketone, benzophenone, etc.; and 0.1 to 5wt.% of at least one additive selected from a group consisting of adhesion enhancer, defoaming agent, leveling agent, wetting and dispersing agent, stabilizer, fine particle dispersing agent and the like. The resin composition contains pure water as the solvent in the range of 50 to 150 parts by weight relative to total 100 parts by weight of all of the above ingredients, in consideration of coating characteristics such as viscosity to conductive tiles.

### (2) coating of conductive tile with water soluble photo-curable resin composition

The water soluble photo-curable resin composition of the present invention can be applied to conductive tiles by generally known processes such as spray coating, gravure coating, roll coating, bar coating, etc. A coating film preferably has thickness of 5 to 10 *µ*m. If thickness of the coating film is less than 5 *µ*m, pure water is removed during UV curing described below to cause reduction of thickness in response to the removed amount of pure water. As a result, the conductive tile flooring material cannot continuously have desired antistatic property and may be partially uncoated thereon. On the other hand, when the tile flooring material is coated with the resin composition with thickness of more than 10*µ*m, the tile flooring material has reduced scratch resistance to cause poor appearance and generation of fine wear particles. After completely drying, a coating layer formed by the resin composition preferably has thickness of 3 to 7 *µ*m.

For UV irradiation for curing the resin ingredient, UV energy source useable in the present invention includes, for example, high pressure mercury lamp, halogen lamp, xenon lamp, nitrogen laser, etc. Radiation dose of UV energy beam preferably ranges from 50 to 3,000 mJ/cm² as UV light exposing dose accumulated at 365nm. If less than 50mJ/cm², the resin composition is not sufficiently cured to cause reduction of wear resistance and/or scratch resistance. On the contrary, when the radiation dose is more than 3,000mJ/cm², yellowing of the tile flooring material is observed to result in poor transparency.

The conductive tile flooring material of the present invention is prepared using various formed products such as sheet or injection molded articles based on thermoplastic and/or thermosetting plastic materials which include, for example, PVC, ABS (acrylonitrile butadiene styrene), PMMA (polymethyl methacrylate), PP (polypropylene), rubber resin, etc. The conductive tile flooring material must have electric resistance of less than 10⁹Ω as measured by ASTM F 150 standards, and wear resistance of not more than 0.6g per 1,000 cycles as measured by ASTM D 3389 standards. When the above characteristics are not within the defined values, it is substantially difficult to achieve desired coating effect even when the conductive tile flooring material had the coating film formed by the water soluble photo-curable resin composition according to the present invention.

The conductive tile flooring material having double-layer laminated structure coated with the water soluble photo-curable antistatic composition of the present invention has improved wear resistance and antistatic property. In addition, the water soluble photo-curable resin composition of the present invention with high transparency sufficiently express original colors of tile floorings commercially available in the market, therefore, is usefully applied to manufacturing of conductive tile flooring materials for clean-room, antistatic packaging materials, etc.

Hereinafter, the present invention will be more particularly described by examples. However, these are intended to illustrate the invention as preferred embodiments of the present invention and do not limit the scope of the present invention and accompanied claims.

### EXAMPLE 1

Mixing all of ingredients listed in the following Table 1, a water soluble photo-curable antistatic coating composition with favorable wear resistance and transparency was prepared. As a water soluble oligomer ingredient of the coating composition, urethane acrylate having polyethyleneglycol as main chain was used. The coating composition further included a monomer including caprolactone as mono-functional group and hexanediol diacrylate as di-functional group. For the coating composition, a water dispersible ATO solution available from Ishihara Co., Japan and multi-walled carbon nanotubes available from Iljin Nanotech, Korea, were used as conductive fine particles and a carbon nanotube ingredient, respectively. Furthermore, as a conductive fine particle dispersing agent containing carbon nanotubes, sodium dodecylsulfate (SDS) was dispersed by means of ultrasonic dispersion processes. A photo-polymerization initiator was ketones such as 1-hydroxycyclohexylphenylketone and benzophenone. Fumed silica contained in the composition was an aqueous dispersion available from Degussa. The coating composition further included other ingredients in small amounts including, for example, a defoaming agent, a wetting and dispersing agent and a leveling agent. Pure water used as a solvent included contents of pure water in ATO and fumed silica, and amount of the pure water was controlled to 100:100 relative to all ingredients of the composition, in terms of (parts by weight of pure water) : (total parts by weight of other ingredients including organic and inorganic components in the composition). In Table 1, compositions of all ingredients including pure water were indicated in percent by weight for illustrative convenience.

The prepared coating composition was applied to a conductive tile specimen made of PVC resin with dimension of 10cm×10cm, followed by staying the specimen in a vacuum dryer at 80 for 5 minutes to remove bubbles and residual part of the solvent. The tile specimen coated with the composition was subjected to irradiation of 1,000mJ/cm² by means of a mercury lamp to form a cross-linking cured film on surface of the specimen.

### EXAMPLE 2

The same procedure described in Example 1 was performed except that contents of both carbon nanotubes and fumed silica were altered.

### COMPARATIVE EXAMPLE 1

The same procedure described in Example 1 was performed except that carbon nanotubes were not added.

### COMPARATIVE EXAMPLE 2

The same procedure described in Example 1 was performed except that fumed silica as a wear resistance enhancer was not added.

### COMPARATIVE EXAMPLE 3

The same procedure described in Example 1 was performed except that neither of carbon nanotubes nor fumed silica were added.

### COMPARATIVE EXAMPLE 4

The conductive tile flooring material of the present invention was compared to a control which was not coated by the water soluble photo-curable resin composition according to the present invention.

### COMPARATIVE EXAMPLE 5

The same procedure described in Example 1 was performed except that content of pure water was altered to 40 parts by weight relative to total 100 parts by weight of all ingredients including organic and inorganic components in the coating composition.

### COMPARATIVE EXAMPLE 6

The same procedure described in Example 1 was performed except that content of pure water was altered to 160 parts by weight relative to total 100 parts by weight of all ingredients including organic and inorganic components in the coating composition.

**TABLE 1**

| Ingredients | | Constitutional compositions (wt.%) | | | | | |
|---|---|---|---|---|---|---|---|
| | | Example | | Comparative Example | | | |
| | | 1 | 2 | 1 | 2 | 3 | 4 |
| Conductiv e fine particles | ATO | 5.0 | 5.0 | 5.0 | 5.0 | 5.0 | - |
| | Multi-walled carbon nanotubes | 0.5 | 1.5 | 0 | 0.5 | 0 | - |
| Wear resistance enhancer | Fumed silica | 1.0 | 0.5 | 1.0 | 0 | 0 | - |
| Urethane acrylate oligomer | WS-4000 | 21 | 21 | 21 | 21 | 21 | - |
| Mono-functional monomer | Caprolactone acrylate | 5.5 | 5.0 | 6.0 | 5.5 | 6.0 | - |
| di-functional monomer | Hexanediol diacrylate | 15 | 15 | 15 | 16 | 16 | - |
| Photo-polymeriza tion initiator | 1-hydroxycyclohe xylphenylketon e + benzophenone | 1.0 | 1.0 | 1.0 | 1.0 | 1.0 | - |
| Other additive | Defoaming agent, dispersing agent, leveling agent, etc. | 1.0 | 1.0 | 1.0 | 1.0 | 1.0 | - |
| Solvent | Pure water | 50 | 50 | 50 | 50 | 50 | - |

Physical properties of each of the prepared compositions in Examples 1 and 2, and Comparative Examples 1 to 4 were determined as follows. But, light transmission was measured after applying the composition to PET film and transmission loss caused by light transmission of PET film itself was compensated.

After preparation of at least five specimens, measurement was repeated five times for each of the specimen. The following measurement results were obtained based on mean value calculated from the measured values except maximum and minimum values.
(1) Wear resistance
   Determined by ASTM D 3389 standards
(2) Electric resistance
   Determined by ASTM F 150 standards using PRS-801
(3) Light transmission
   Mean value of light transmissions at 350 to 700nm measured by UV spectrometer
(4) Pencil hardness
   Measured by ASTM D 3363 standards
(5) Adhesiveness
   Determined by ASTM D 3359-2 standards
   5B: No film stripping
   4B: less than 5% of film stripping
   3B: 5% to 15% of film stripping
   2B: more than 15% to 35% of film stripping
   1B: more than 35% to 65% of film stripping
   0B: more than 65% of film stripping
(6) Surface smoothness
   Appearance of film after curing was observed for film smoothness
   ○: excellent appearance of surface of a film substantially equal to mirror surface
   Δ: slightly uneven surface of a film
   ×: lots of lines (or creases) on surface of a film
(7) thickness of coating film

Using a micrometer, thicknesses of a conductive tile before and after coating were measured and compared to each other. Thickness of the tile was also determined by SEM (scanning electron microscope) measurement. Results of the above measurements are shown in the following Table 2, in which N/A means "data not available" by the measurement.

**TABLE 2**

| | Examples | | Comparative Examples | | | | | |
|---|---|---|---|---|---|---|---|---|
| | 1 | 2 | 1 | 2 | 3 | 4 | 5 | 6 |
| Wear resistance(g) | <0.1 | <0.1 | <0.1 | 0.6 | 0.7 | 0.6 | 1.1 | 0.8 |
| Electric resistance (Ω) | 10⁸ | 10⁷ | 10¹⁰ | 10⁸ | 10¹⁰ | 10⁹ | 10⁹ | 10⁹ |
| Light transmission (%) | 85 | 80 | 90 | 85 | 90 | N/A | 70 | 90 |
| Pencil hardness | 3H | 4H | 3H | 3H | 1H | 1H | 3H | 1H |
| Adhesiveness | 4B | 5B | 4B | 5B | 5B | N/A | 2B | N/A |
| Surface smoothness | Δ | ○ | Δ | ○ | ○ | N/A | X | X |
| Thickness of coating film (µ*m*) | ∼5 | ∼5 | ∼7 | ∼5 | ∼7 | N/A | -12 | N/A |

As shown in Table 2, it was demonstrated that the both of coating compositions prepared by Examples 1 and 2 show excellent wear resistance and favorable antistatic effect. That is, it can be understood that the present inventive coating compositions using carbon nanotubes and fumed silica as prepared in Examples 1 and 2 have improved wear resistance and antistatic property as well as high transparency.

In contrast, although the composition prepared in Comparative Example 1 showed favorable wear resistance by application of fumed silica, it had less content of conductive fine particles and lowered electric resistance because no carbon nanotube was added and the coating film functioned as an insulation layer. On the other hand, it was demonstrated that the composition prepared in Comparative Example 2 exhibited good antistatic resistance but lower wear resistance while the composition prepared in Comparative Example 3 had reduced wear resistance and increased electric resistance caused by application of neither of carbon nanotubes nor fumed silica. For the conductive tile flooring material prepared in Comparative Example 4 which was not coated with the water soluble photo-curable resin composition, it was found that this material had higher electric resistance and lower wear resistance rather than those having coating films formed of the coating compositions prepared in Examples 1 and 2, respectively.

The coating compositions prepared in Comparative Examples 5 and 6 showed different characteristics dependent on content of pure water. Compared to the coating composition without controlling content of pure water, the coating composition with controlled content of pure water to continuously have desired thickness of a coating film represented considerably improved characteristics such as wear resistance, transparency, etc. Alternatively, the coating film formed using each of the coating compositions prepared by Comparative Examples 5 and 6 showed entirely deteriorated characteristics.

## Claims

1. A water soluble photo-curable antistatic resin composition, comprising: in relation to total weight of the composition, 5 to 15wt.% of conductive fine particles containing carbon nanotubes; 0.1 to 5wt.% of fumed silica; 10 to 20wt.% of water soluble epoxy or urethane acrylate based oligomer; 20 to 75wt.% of mono-functional monomer or multi-functional monomer; 0.1 to 5wt.% of photo-polymerization initiator; 0.1 to 5wt.% of additive including at least one selected from a group consisting of adhesion enhancer, dispersing agent, defoaming agent, leveling agent and the like; and 50 to 150 parts by weight of pure water relative to total 100 weight of the above ingredients;
wherein the conductive fine particles have 0.004 to 80wt.% of carbon nanotubes and further include antimony-doped tin oxide (ATO);
wherein the conductive fine particles have particle diameter in the range of 5 to 200 nm.

2. The resin composition according to claim 1, wherein the carbon nanotubes comprise at least one selected from a group consisting of: single-walled, double-walled and/or multi-walled carbon nanotube treated in strong acidic and/or basic solution such as nitric acid, mixture of nitric acid and sulfuric acid, hydrogen peroxide, mixture of hydrogen peroxide and ammonium hydroxide, etc.; surface modified carbon nanotube by organic compound such as imidazole, amine, acryl, etc.; carbon nanotube heated at 400 °C or more for at least 2 hours; and carbon nanotube in original state thereof without alternative treatment.

3. Use of a resin composition according to any one of claims 1-2 for coating a conductive tile flooring material having double-layer laminated structure.

4. A conductive tile flooring material having double-layer laminated structure which comprises conductive tile and a transparent coating layer capable of expressing at least 80% of original color of the conductive tile wherein said coating layer is prepared by applying a water soluble photo-curable antistatic resin composition, according to any one of claims 1-3, to surface of a conductive tile with thickness of 5 to 10 µm by means of general coating processes such as spray coating, gravure coating, roll coating or bar coating.

5. The tile flooring material according to claim 4, wherein the material has a coating layer formed of the water soluble photo-curable resin composition with thickness of 3 to 7µm after complete drying of solvent.

## Patentansprüche

1. Wasserlösliche, Licht-aushärtbare, antistatische Kunstharz-Zusammensetzung, im Verhältnis zum Gesamtgewicht der Zusammensetzung aufweisend
5 bis 15 Gew.-% leitfähige Feinpartikel mit Karbon-Nanoröhrchen;
0,1 bis 5 Gew.-% pyrogenes Siliziumdioxid;
10 bis 20 Gew.-% wasserlösliches Oligomer auf Epoxy- oder Urethanacrylat-Basis;
20 bis 75 Gew.-% monofunktionales Monomer oder multifunktionales Monomer;
0,1 bis 5 Gew.-% Photopolymerisations-Initiator;
0,1 bis 5 Gew.-% Additive inklusive zumindest einem, ausgewählt aus einer Gruppe bestehend aus Adhäsionsverstärker, Dispergiermittel, Antischaummittel, Verlaufmittel und dergleichen; und
50 bis 150 Gewichtsanteile reinen Wassers gegenüber einem Gesamtgewicht von 100 der oben genannten Bestandteile;
wobei die leitfähigen Feinpartikel 0,004 bis 80 Gew.-% Karbon-Nanoröhrchen aufweisen und des Weiteren Antimon-dotiertes Zinnoxid (ATO) umfassen;
wobei die leitfähigen Feinpartikel einen Durchmesser im Bereich von 5 bis 200 nm haben.

2. Kunstharz-Zusammensetzung gemäß Anspruch 1, wobei die Karbon-Nanoröhrchen zumindest eine Art aufweisen, ausgewählt aus einer Gruppe bestehend aus:
einwandige, doppelwandige und / oder mehrwandige Karbon-Nanoröhrchen, behandelt in stark saurer und / oder basischer Lösung wie Salpetersäure, Mischung von Salpetersäure und Schwefelsäure, Wasserstoffperoxid, Mischung von Wasserstoffperoxid und Ammoniak, etc.; oberflächenmodifizierte Karbon-Nanoröhrchen aus organischen Verbindungen wie Imidazol, Amin, Acryl, etc.; Karbon-Nanoröhrchen erhitzt auf 400°C oder höher für mindestens 2 Stunden; und Karbon-Nanoröhrchen im Originalzustand ohne alternative Behandlung.

3. Verwendung einer Kunstharz-Zusammensetzung gemäß einem der Ansprüche 1 bis 2 zur Beschichtung von leitfähigem Fliesenbodenmaterial mit zweischichtigem, laminiertem Aufbau.

4. Leitfähiges Fliesenbodenmaterial mit zweischichtigem, laminiertem Aufbau das leitfähige Fliesen aufweist und eine transparente Deckschicht, die zumindest 80% der Originalfarbe der leitfähigen Fliese wiedergibt, wobei die Deckschicht durch Auftragen einer wasserlöslichen, Licht-aushärtbaren, antistatischen Kunstharz-Zusammensetzung gemäß einem der Ansprüche 1 bis 3, auf die Oberfläche einer leitfähigen Fliese mit einer Stärke von 5 bis 10µm mittels allgemeiner Beschichtungsverfahren, wie Sprühbeschichtung, Gravurbeschichtung, Walzbeschichtung oder Streifenbeschichtung, erstellt wird.

5. Fliesenbodenmaterial gemäß Anspruch 4, wobei das Material eine Deckschicht, gebildet aus der wasserlöslichen, lichthärtbaren, antistatischen Kunstharz-Zusammensetzung mit einer Stärke von 3 bis 7 µm, nach vollständiger Abtrocknung des Lösemittels, aufweist.

## Revendications

1. Composition de résine antistatique photo-durcissable soluble dans l'eau, comprenant : par rapport au poids total de la composition, 5 à 15 % en poids de particules conductrices fines contenant des nanotubes de carbone ; 0,1 à 5 % en poids de silice pyrogénée ; 10 à 20 % en poids d'un oligomère à base d'époxy ou d'uréthane acrylate soluble dans l'eau ; 20 à 75 % en poids d'un monomère mono-fonctionnel ou d'un monomère multi-fonctionnel ; 0,1 à 5 % en poids d'un initiateur de photo-polymérisation ; 0,1 à 5 % en poids d'un additif comprenant au moins un sélectionné dans un groupe constitué d'un agent améliorant l'adhérence, d'un agent de dispersion, d'un agent antimousse, d'un agent d'écoulement et équivalents ; et 50 à 150 parties en poids d'eau pure par rapport à un total de 100 en poids des ingrédients ci-dessus ;
dans laquelle les particules conductrices fines présentent 0,004 à 80 % en poids de nanotubes de carbone et comprennent en outre un oxyde d'étain dopé à l'antimoine (ATO) ;
dans laquelle les particules conductrices fines ont un diamètre de particule située dans la plage allant de 5 à 200 nm.

2. Composition de résine selon la revendication 1, dans laquelle les nanotubes de carbone comprennent au moins un sélectionné dans un groupe constitué : d'un nanotube de carbone à simple paroi, à double paroi et/ou à multiples parois traité dans une solution fortement acide et/ou basique comme l'acide nitrique, un mélange d'acide nitrique et d'acide sulfurique, le peroxyde d'hydrogène, un mélange de peroxyde d'hydrogène et d'oxyde d'ammonium, etc. ; d'un nanotube de carbone à surface modifiée par un composé organique comme l'imidazole, une amine, l'acryle, etc. ; d'un nanotube de carbone chauffé à 400 °C ou plus pendant au moins 2 heures ; et d'un nanotube de carbone dans son état d'origine sans traitement alternatif.

3. Utilisation d'une composition de résine selon l'une quelconque des revendications 1 et 2 pour le revêtement d'un matériau conducteur de carrelage ayant une structure stratifiée à double couche.

4. Matériau conducteur de carrelage ayant une structure stratifiée à double couche qui comprend un carreau conducteur et une couche de revêtement transparent capable d'exprimer au moins 80 % de la couleur d'origine du carreau conducteur dans lequel ladite couche de revêtement est préparée en appliquant une composition de résine antistatique photo-durcissable soluble dans l'eau, selon l'une quelconque des revendications 1 à 3, sur une surface d'un carreau conducteur avec une épaisseur de 5 à 10 µm au moyen de procédés de revêtements généraux tels qu'un revêtement par pulvérisation, un revêtement par gravure, un revêtement au rouleau ou un revêtement à la barre.

5. Matériau de carrelage selon la revendication 4, dans lequel le matériau présente une couche de revêtement formée de la composition de résine photo-durcissable soluble dans l'eau ayant une épaisseur de 3 à 7 µm après séchage complet du solvant.
